(19) Europäisches Patentamt
European Patent Office
Office européen des brevets

(11) EP 4 333 557 A1

(12) **EUROPEAN PATENT APPLICATION**

(43) Date of publication:
**06.03.2024 Bulletin 2024/10**

(21) Application number: **23193911.7**

(22) Date of filing: **29.08.2023**

(51) International Patent Classification (IPC):
***H05B 1/02** (2006.01)* ***H04N 23/52** (2023.01)*
***G02B 7/02** (2021.01)* ***B60S 1/02** (2006.01)*
***G03B 17/55** (2021.01)*

(52) Cooperative Patent Classification (CPC):
**H05B 1/0205; G02B 27/0006; G03B 17/55; H04N 23/52; H05B 1/0236**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **02.09.2022 CN 202211071141**

(71) Applicant: **Faurecia Clarion Electronics (Xiamen) Co., Ltd.**
**Xiamen Fujian (CN)**

(72) Inventors:
- **QIU, Jie**
  **Xiamen (CN)**
- **LUO, Jianfu**
  **Xiamen (CN)**
- **SHAO, Jinbing**
  **Xiamen (CN)**
- **WU, Yaping**
  **Xiamen (CN)**

(74) Representative: **Casalonga**
**Casalonga & Partners**
**Bayerstraße 71/73**
**80335 München (DE)**

# (54) HEATING SYSTEM AND METHOD FOR CONTROLLING THE SAME

(57) A heating system (10) includes: a control device (11), a power supply device (12) and a heating circuit (13). The heating circuit (13) includes a heating component (131) and a current control component (132). The power supply device (12) is used to provide a heating current for the heating circuit (13). The heating component (131) is used to heat the camera (22) with the heating current. The current control component (132) is used to adjust a resistance of the heating circuit (13). The resistance is negatively correlated with a current passing through the heating circuit (13). The control device (11) is used to control the power supply device (12) to adjust a current value of the heating current from a first current value to a second current value after detecting that the heating component (131) enters a non-energized state from an energized state. The second current value is less than the first current value.

10
Control device 11
Power supply device 12
Heating circuit 13
Heating component 131
Current control component 132

FIG. 3

EP 4 333 557 A1

## Description

### TECHNICAL FIELD

The present disclosure relates to the field of camera technologies, in particular to a heating system and a method for controlling a heating system.

### BACKGROUND

At present, in order to solve the problem of frosting and fogging on the camera, a heating wire or heating film in the camera is usually connected to a power supply. When heating is required, the user turns on the power supply, so that the power supply provides electric energy for the heating wire or the heating film to achieve drying of the surface of the camera. When the heating is completed, the user turns off the power supply, so that the power supply stops providing electric energy to the heating wire or the heating film.

### SUMMARY

In a first aspect, a heating system is provided. The heating system is used to heat a camera. The camera includes an optical lens and a photosensitive component. The heating system includes a control device, a power supply device, and a heating circuit. The heating circuit includes a heating component and a current control component. The power supply device is used to provide a heating current for the heating circuit. The heating component is used to heat the camera with the heating current. The current control component is used to adjust a resistance of the heating circuit. The resistance is negatively correlated with a current passing through the heating circuit. The control device is used to control the power supply device to adjust a current value of the heating current from a first current value to a second current value after detecting that the heating component enters a non-energized state from an energized state. The second current value is less than the first current value.

In some embodiments, the heating system further includes a sensing resistor. The control device is further used to obtain a voltage difference between two ends of the sensing resistor, and determine that the heating component enters the non-energized state from the energized state in a case where the voltage difference is less than or equal to a first preset voltage threshold.

In some embodiments, the power supply device is further used to detect the current value of the heating current, and adjust a direct current bias voltage based on the current value. The control device is further used to detect the direct current bias voltage, and determine that the heating component enters the non-energized state from the energized state in a case where the direct current bias voltage is less than or equal to a second preset voltage threshold.

In some embodiments, the heating system further includes a first coil and a second coil. The first coil is used to receive the heating current to create a magnetic field. The second coil is used to generate an induced current due to the magnetic field and supply power to the heating circuit with the induced current.

In some embodiments, the heating system further includes a first capacitor; the first capacitor is electrically connected to the first coil to constitute an inductor-capacitor (LC) circuit; and the control device is further used to detect an oscillation waveform of the LC circuit, and determine that the heating component enters the non-energized state from the energized state when a duty ratio of the oscillation waveform is less than a first preset threshold.

In some embodiments, the heating circuit further includes a second capacitor connected in parallel with the second coil.

In some embodiments, the heating component is a heating film, and the heating film is configured to be fixed on the camera in a circular shape; the second coil is configured to be fixed on a side of the camera, and a magnetic isolation film is provided between the second coil and the camera; the first coil is connected to the power supply device, and a shielding wire is provided between the first coil and the power supply device.

In some embodiments, the power supply device includes a low dropout (LDO) regulator, a first overcurrent protection component, a second overcurrent protection component, a current detection component, a driving component, a step-down direct-current-direct-current (DC-DC) component, a first triode, a second triode, a third triode, a fourth triode, a pulse-width modulation (PWM) component, a first control terminal and a second control terminal. The LDO regulator, the step-down DC-DC component, and the PWM component are all connected to the control device; the PWM component is connected to the driving component; the first overcurrent protection component is connected in series with the first transistor triode; the second overcurrent protection component is connected in series with the second triode; the current detection component is connected in series with the third triode and the fourth triode; the first control terminal is connected to the first triode; the third triode is connected to the second control terminal; and the current detection component is connected to the control device.

In a second aspect, a method for controlling a heating system is provided, which is applied to the heating system in the first aspect. The method includes: controlling the power supply device to provide the heating current for the heating circuit, so that the heating component heats the camera with the heating current; and controlling the power supply device to adjust the current value of the heating current from the first current value to the second current value after detecting that the heating component enters the non-energized state from the energized state. The second current value is less than the first current value, the energized state of the heating component is determined according to the resistance of the current control component, and the resistance is negatively correlated with the current passing through the heating circuit.

In some embodiments, controlling the power supply device to adjust the current value of the heating current from the first current value to the second current value includes: controlling the power supply device to stop supplying power to the heating circuit; and controlling the power supply device to supply power to the heating circuit with the heating current of the second current value after a preset time period.

In some embodiments, the method further includes: in a case where the current value of the heating current is the first current value and the heating component in the energized state is detected, controlling the power supply device to adjust the current value of the heating current from the first current value to a third current value, the third current value being greater than the first current value.

In some embodiments, the heating system further includes a sensing resistor; the method further includes: obtaining a voltage difference between two ends of the sensing resistor; and in a case where the voltage difference is less than or equal to a first preset voltage threshold, determining that the heating component enters the non-energized state from the energized state.

In some embodiments, the method further includes: detecting a direct current bias voltage of the power supply device; and in a case where the direct current bias voltage is less than or equal to a second preset voltage threshold, determining that the heating component enters the non-energized state from the energized state, the direct current bias voltage being positively correlated with the heating current.

In some embodiments, the heating system further includes a first capacitor and a first coil, the first capacitor is electrically connected to the first coil to constitute an inductor-capacitor (LC) circuit; the method further includes: detecting an oscillation waveform of the LC circuit; and in a case where a duty ratio of the oscillation waveform is less than a first preset threshold, determining that the heating component enters the non-energized state from the energized state.

## BRIEF DESCRIPTION OF THE DRAWINGS

In order to describe technical solutions in the present disclosure more clearly, accompanying drawings to be used in some embodiments of the present disclosure will be introduced briefly below. However, the accompanying drawings to be described below are merely accompanying drawings of some embodiments of the present disclosure, and a person of ordinary skill in the art may obtain other drawings according to these drawings. In addition, the accompanying drawings in the following description may be regarded as schematic diagrams, and are not limitations to actual sizes of products, actual processes of methods or actual timings of signals involved in the embodiments of the present disclosure.

FIG. 1 is a diagram showing an electromagnetic mutual inductance, in accordance with some embodiments of the present disclosure;
FIG. 2 is a diagram showing an electromagnetic mutual inductance, in accordance with some other embodiments of the present disclosure;
FIG. 3 is a structural diagram of a heating system, in accordance with some embodiments of the present disclosure;
FIG. 4 is a diagram showing a relationship between heating current and time during a heating process, in accordance with some embodiments of the present disclosure;
FIG. 5 is a diagram showing a relationship between heating current and time during a heating process, in accordance with some other embodiments of the present disclosure;
FIG. 6 is a diagram showing a relationship between heating current and time during a heating process, in accordance with still some other embodiments of the present disclosure;
FIG. 7 is a diagram showing a relationship between heating current and time during a heating process, in accordance with still some other embodiments of the present disclosure;
FIG. 8 is a structural diagram of another heating system, in accordance with some embodiments of the present disclosure;
FIG. 9 is a structural diagram of yet another heating system, in accordance with some embodiments of the present disclosure;
FIG. 10 is a diagram showing a mutual inductance structure, in accordance with some embodiments of the present disclosure;

FIG. 11 is a structural diagram of yet another heating system, in accordance with some embodiments of the present disclosure;

FIG. 12 is a structural diagram of a power supply device, in accordance with some embodiments of the present disclosure;

FIG. 13 is a schematic diagram of an energy transfer efficiency of a power supply device, in accordance with some embodiments of the present disclosure;

FIG. 14 is a structural diagram of a chip, in accordance with some embodiments of the present disclosure;

FIG. 15 is a schematic diagram of an energy conversion efficiency of a chip, in accordance with some embodiments of the present disclosure;

FIG. 16 is a diagram showing detection oscillation waveforms, in accordance with some embodiments of the present disclosure;

FIG. 17 is a diagram showing an installation process of a heating component, in accordance with some embodiments of the present disclosure; and

FIG. 18 is a diagram showing an installation process of a heating component, in accordance with some other embodiments of the present disclosure.

## DETAILED DESCRIPTION

In order to enable a person having ordinary skill in the art to well understand the technical solutions of the present disclosure, the technical solutions in the embodiments of the present disclosure will be clearly described below in conjunction with the accompanying drawings. However, the described embodiments are merely some but not all of embodiments of the present disclosure. All other embodiments obtained by a person having ordinary skill in the art based on the embodiments of the present disclosure shall be included in the protection scope of the present disclosure.

Unless the context requires otherwise, throughout the description and claims, the term "comprise" and other forms thereof such as the third-person singular form "comprises" and the present participle form "comprising" are construed as an open and inclusive meaning, i.e., "including, but not limited to". In the description of the specification, terms such as "one embodiment", "some embodiments", "exemplary embodiments", "example", "specific example" or "some examples" are intended to indicate that specific features, structures, materials or characteristics related to the embodiment(s) or example(s) are included in at least one embodiment or example of the present disclosure. Schematic representations of the above terms do not necessarily refer to the same embodiment(s) or example(s). In addition, specific features, structures, materials, or characteristics described herein may be included in any one or more embodiments or examples in any suitable manner.

Some embodiments may be described using the terms "electrically connected" and "connected" and their derivatives. For example, the term "connected" may be used when describing some embodiments to indicate that two or more components are in direct physical or electrical contact with each other.

The use of "used to" or "configured to" herein is meant to be an open and inclusive expression that does not exclude devices used or configured to perform additional tasks or steps.

In addition, the use of the phrase "based on" or "according to" is meant to be open and inclusive, since a process, step, calculation or other action that is "based on" or "according to" one or more of the stated conditions or values may, in practice, be based on or according to additional conditions or values exceeding those stated.

It should be noted that the terms such as "first" and "second" in the present disclosure are used to distinguish similar objects, but not necessarily used to describe a specific order or sequence. It can be understood that the terms used herein are interchangeable under appropriate circumstances such that the embodiments of the present disclosure described herein can be implemented in sequence other than those illustrated or described herein. The implementations described in the following embodiments do not represent all implementations consistent with the present disclosure. In addition, they are merely examples of devices and methods consistent with aspects of the present disclosure as recited in the claims.

Hereinafter, the terms such as "first" and "second" are only used for descriptive purposes, and are not to be construed as indicating or implying the relative importance or implicitly indicating the number of indicated technical features. Thus, features defined with "first" and "second" may explicitly or implicitly include one or more of the features. In the description of the embodiments of the present disclosure, the term "a plurality of" or "the plurality of" means two or more unless otherwise specified.

The relevant components, application scenarios, and implementation environment involved in the present disclosure will be briefly described below.

First, the relevant components involved in the present disclosure are briefly introduced below.

A mutual induction phenomenon refers to a phenomenon that in two adjacent coils, when a current in one coil changes with time, a magnetic flux passing through another coil changes, and an induced electromotive force generated in the another coil. The induced electromotive force generated due to the mutual induction phenomenon is called a mutual induction electromotive force.

A coefficient of mutual inductance is a physical quantity that can reflect a coupling degree of two circuits. The coefficient of mutual inductance is related to geometrical dimensions, the number of turns, relative position and distribution of surrounding magnetic media of the two coupling coils. When the magnetic media are non-ferromagnetic substances, the coefficient of mutual inductance is constant and is independent of currents in the coils. In addition, the International System of Unit (SI unit) of the coefficient of mutual inductance is Henry (H).

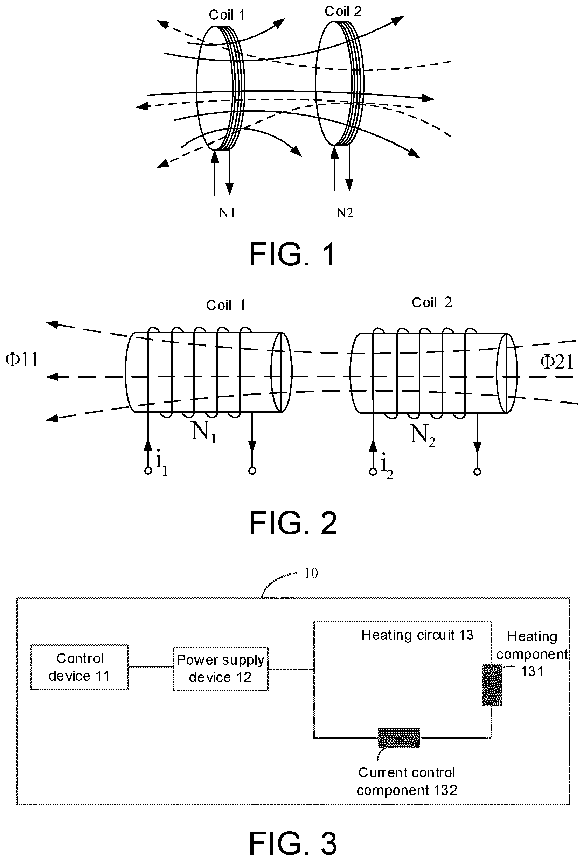

For example, as shown in FIG. 1, there are two adjacent closed coils, i.e., a coil 1 and a coil 2. The number of turns of the coil 1 is $N_1$, and the number of turns of the coil 2 is $N_2$.

When a current in the coil 1 changes, a magnetic field induced in the coil 1 will cause an induced electromotive force in the coil 2. Similarly, when a current $I_2$ in the coil 2 changes, an induced electromotive force will be created in the coil 1. This phenomenon that a magnetic flux created by a current flowing in one coil passes through another coil is referred to as coupling.

In addition, a phenomenon that change in a current in one coil causes an induced electromotive force created in another coil is a mutual induction phenomenon. The induced electromotive force created due to the mutual induction phenomenon is a mutual induction electromotive force. Thus, the two coils become mutual inductance coupling coils.

With reference to FIG. 2, the number of turns of the coil 1 is $N_1$, and the number of turns of the coil 2 is $N_2$. The current in the coil 1 is $I_1$, and the current in the coil 2 is $I_2$. A self-inductance magnetic flux $\phi_{11}$, is a magnetic flux of the coil 1 when an alternating current $I_1$ passes through the coil 1. The mutual inductance magnetic flux $\phi_{21}$ is a magnetic flux of the coil 2 when a part of the self-inductance magnetic flux $\phi_{11}$, in the magnetic field created by the alternating current $I_1$ passes through the coil 2. In a case where the shapes and relative positions of the coil 1 and the coil 2 and the magnetic permeability of the surrounding media remain unchanged, the coil 1 and the coil 2 satisfy the following Formula 1 and Formula 2.

$$\psi_{21} = N_2\phi_{21} = M_{21}I_1 \qquad \text{Formula 1}$$

Here, $\psi_{21}$ is a mutual inductance magnetic flux linkage of the coil 2, $N_2$ is the number of turns of the coil 2, and $\phi_{21}$ is the mutual inductance magnetic flux of the coil 2. $M_{21}$ is the coefficient of mutual inductance of the coil 2, and $I_1$ is the current in the coil 1.

$$\psi_{12} = N_1\phi_{12} = M_{12}I_2 \qquad \text{Formula 2}$$

Here, $\psi_{12}$ is a mutual inductance magnetic flux linkage of the coil 1, $N_1$ is the number of turns of the coil 1, $\phi_{12}$ is the mutual inductance magnetic flux of the coil 1, $M_{12}$ is the coefficient of mutual inductance of the coil 1, and $I_2$ is the current of the coil 2.

Based on theoretical and practical proofs, $M_{12}$ and $M_{21}$ are always equal, which are satisfy Formula 3.

$$M_{12} = M_{21} \qquad \text{Formula 3}$$

In addition, the relative position of the coil 1 and the coil 2 determines the coupling coefficient K. Here, K is greater than or equal to 0 and less than or equal to 1 ($0 \le K \le 1$); when K is close to 1, the coil 1 and the coil 2 are strongly coupled; when K is close to 0, the coil 1 and the coil 2 are weakly coupled. For example, when K is equal to 1 ($K = 1$), the coil 1 and the coil 2 are fully coupled. In this case, all self-inductance magnetic fluxes are mutual inductance magnetic fluxes.

For example, the calculation process of the coupling coefficient is as the following Formula 4, Formula 5, Formula 6 and Formula 7.

$$L_1 = \frac{\psi_{11}}{I_1} = \frac{N_1\phi_{11}}{I_1} \qquad \text{Formula 4}$$

Here, $L_1$ is the decoupling equivalent coefficient of the coil 1, $\psi_{11}$ is the self-inductance magnetic flux linkage of the coil 1, $I_1$ is the current in the coil 1, $N_1$ is the number of turns of the coil 1, and $\phi_{11}$, is the mutual inductance magnetic flux of the coil 2.

$$L_2 = \frac{\psi_{22}}{I_2} = \frac{N_2 \phi_{22}}{I_2} \qquad \text{Formula 5}$$

Here, $L_2$ is the decoupling equivalent coefficient of the coil 2, $\psi_{22}$ is the self-inductance magnetic flux linkage of the coil 2, $I_2$ is the current of the coil 1, $N_2$ is the number of turns of the coil 2, and $\phi_{22}$ is the mutual inductance magnetic flux of the coil 1.

$$K = \sqrt{\frac{M_{12} M_{21}}{L_2 L_1}} = \sqrt{\frac{\psi_{12} \psi_{21}}{\psi_{11} \psi_{22}}} = \sqrt{\frac{\phi_{12} \phi_{21}}{\phi_{11} \phi_{22}}} \qquad \text{Formula 6}$$

Here, $K$ is the coupling coefficient of the coil 1 and the coil 2, $M_{12}$ is the coefficient of mutual inductance of the coil 1, $M_{21}$ is the coefficient of mutual inductance of the coil 2, $L_1$ is the decoupling equivalent coefficient of the coil 1, and $L_2$ is the decoupling equivalent coefficient of the coil 2, and $\psi_{21}$ is the mutual inductance magnetic flux linkage of the coil 2, $\psi_{12}$ is the mutual inductance magnetic flux linkage of the coil 1, $\psi_{22}$ is the self-inductance magnetic flux linkage of the coil 2, $\psi_{11}$ is the self-inductance magnetic flux linkage of the coil 1, $\phi_{12}$ is the mutual inductance flux of the coil 1, $\phi_{22}$ is the mutual inductance magnetic flux of the coil 1, $\phi_{11}$ is the mutual inductance magnetic flux of the coil 2, and $\phi_{21}$ is the mutual inductance magnetic flux of the coil 2.

$$K = \frac{M}{\sqrt{L_2 L_1}} \qquad \text{Formula 7}$$

Here, $K$ is the coupling coefficient of the coil 1 and the coil 2, $M$ is the coefficient of mutual inductance of the coil 1 and the coil 2, $L_1$ is the decoupling equivalent coefficient of the coil 1, and $L_2$ is the decoupling equivalent coefficient of the coil 2.

The phenomenon that the current in one coil changes to cause another coil to generate an induced electromotive force is the mutual induction phenomenon. An electromotive force generated due to the mutual induction phenomenon is referred to as a mutual induction electromotive force.

Referring to FIG. 1, according to Faraday's law of electromagnetic induction, the mutual induction electromotive force generated by the coil 1 and the mutual induction electromotive force generated by the coil 2 satisfy Formula 8 and Formula 9.

$$e_2 = \frac{\Delta \psi_{21}}{\Delta t} = -M_{21} \frac{\Delta I_1}{\Delta t} = M \frac{\Delta I_1}{\Delta t} \qquad \text{Formula 8}$$

Here, $e_2$ is the mutual induction electromotive force generated by the coil 2, $\Delta t$ is unit time, $M$ is the coefficient of mutual inductance of the coil 1 and the coil 2, $\Delta I_1$ is the change value of the current in the coil 1 per unit time, $\psi_{12}$ is the mutual inductance magnetic flux linkage of the coil 1, and $M_{21}$ is the coefficient of mutual inductance of the coil 2.

$$e_1 = \frac{\Delta \psi_{12}}{\Delta t} = -M_{12} \frac{\Delta I_2}{\Delta t} = -M \frac{\Delta I_2}{\Delta t} \qquad \text{Formula 9}$$

Here, $e_1$ is the mutual induction electromotive force generated by the coil 1, $\Delta t$ is unit time, $M$ is the coefficient of mutual inductance of the coil 1 and the coil 2, $\Delta I_2$ is the change value of the current in the coil 2 per unit time, $\psi_{12}$ is the mutual inductance magnetic flux linkage of the coil 1, and $M_{12}$ is the coefficient of mutual inductance of the coil 1.

Next, the application scenarios involved in the present disclosure are briefly introduced below.

In the related art, at present, in order to solve the problem of frosting and fogging on the camera, the heating wire or heating film in the camera is usually connected to a power supply. When heating is required, the user turns on the power supply, so that the power supply provides electric energy for the heating wire or the heating film to achieve drying of the surface of the camera. When the heating is completed, the user turns off the power supply, so that the power supply stops providing electric energy to the heating wire or the heating film.

It can be seen that currently, in the process of heating the camera, the state of the heating wire or the heating film cannot be controlled. In this case, during the heating process of the heating wire or the heating film, the power supply provides a continuous and stable current for the heating wire or the heating film, so that the heating wire or the heating film is in the same heating mode. Thus, it is difficult to effectively defrost and defog. Therefore, how to control the heating of the heating wire or the heating film to well perform defrosting and defogging is an urgent technical problem that needs to be solved.

In addition, since the volume of the camera is small, it is difficult to realize the technical solution of adding a temperature sensor inside the camera to control the heating wire or heating film according to the temperature detected by the temperature sensor. As a result, it is difficult to sense the temperature of the camera, and the current manner of heating the camera is not intelligent enough.

In view of the above problems, some embodiments of the present disclosure provide a heating system, and the heating system is used to heat a camera. The camera includes an optical lens and a photosensitive component. The heating system includes: a control device, a power supply device and a heating circuit. The heating circuit includes a heating component and a current control component. The power supply device is used to provide a heating current to the heating circuit, so that the heating circuit heats the camera through the heating component. The current control component is used to adjust a resistance of the heating circuit. The resistance of the heating circuit is negatively correlated with a current passing through the heating circuit. The control device is used to control the power supply device to adjust a current value of the heating current from a first current value to a second current value after detecting that the heating component enters a non-energized state from an energized state. The second current value is less than the first current value. In this way, the power supply device provides electric energy for the heating component and the current control component in the heating circuit, so that the heating component heats the camera. With the increase of the heating current, when the temperature of the heating component reaches a certain temperature, the current of the heating circuit decreases due to the increase of the resistance of the heating circuit. Thus, the heating component cannot be heated, and enters the non-energized state from the energized state. After the control device detects that the heating component enters to the non-energized state from the energized state, the heating current is reduced, so that the heating component heats the camera at a low temperature.

In this way, the heating system in the embodiments of the present disclosure is used to defrost and defog the camera. Firstly, the power supply device is controlled to provide the current of a high current value for the heating component, which causes the temperature of the camera to be increased quickly, thereby rapidly defrosting and defogging. Next, as the heating current increases, when the temperature of the heating component is high, the current control component adjusts the current of the heating circuit, and when the current control component is turned off, the heating component enters the non-energized state from the energized state. Finally, after the control device detects that the heating component enters the non-energized state from the energized state, the control device determines that the heating component has performed the defrosting and defogging rapidly, and then the heating component continues to defog the camera with a small current. Therefore, the technical problem of how to control the heating of the heating wire or the heating film to well perform defrosting and defogging is solved.

On this basis, as shown in FIG. 3, the embodiments of the present disclosure provides a heating system 10, the heating system 10 is used to heating a camera, and the camera includes an optical lens and a photosensitive component. The heating system 10 includes a control device 11, a power supply device 12 and a heating circuit 13. The heating circuit 13 includes a heating component 131 and a current control component 132.

The control device 11 is electrically connected to the power supply device 12. The power supply device 12 is electrically connected to the heating circuit 13. For example, the power supply device 12 and the heating circuit 13 may adopt a wired connection manner or a wireless connection manner. The heating component 131 and the current control component 132 are connected in series in the heating circuit 13.

The power supply device 12 is used to provide a heating current to the heating circuit 13, so that the heating circuit 13 heats the camera through the heating component 131.

In some embodiments, the power supply device 12 and the heating circuit 13 adopt the wired connection manner. The power supply device 12 provides the heating current to the heating circuit 13, so that the heating circuit 13 heats the camera through the heating component 131.

In some other embodiments, the power supply device 12 and the heating circuit 13 adopt the wireless connection manner. The power supply device 12 provides the heating current to the heating circuit 13, and an electromagnetic field is created by the heating current. Correspondingly, the heating circuit 13 obtains an induced current through the electromagnetic field, and sends the induced current to the heating component 131, so that the heating component 131 heats the camera.

In a possible implementation manner, the heating current provided by the power supply device 12 for the heating circuit 13 varies in different time periods.

In some examples, in a case where the heating system 10 is started, the control device 11 controls the power supply device 12 to increase the current value of the heating current to a first preset current value within a first preset time period. Then, the control device 11 controls the power supply device 12 to supply power to the heating circuit 13 with the heating current of the first preset current value within a second preset time period. Next, the control device 11 controls the power supply device 12 to increase the first preset current value to a second preset current value within a third preset time period, so as to supply power to the heating circuit 13.

It can be understood that in this heating mode, the control device 11 controls the power supply device 12 to increase the current value of the heating current to the first preset current value within the first preset time period, so as to supply power to the heating circuit 13 with the heating current at the first preset current value. In this way, the heating component 131 heats the camera with a steady current, so as to defrost and defog the camera. Furthermore, the control device 11 controls the power supply device 12 to increase the first preset current value to the second preset current value within the third preset time period. In this way, the heating component 131 obtains a large current to increase the temperature of the camera, so as to fully perform defrosting and defogging.

In another situation, in a case where the heating system is started, the control device 11 controls the power supply device 12 to increase the current value of the heating current to the second preset current value within a fourth preset time period, so as to supply power to the heating circuit 13.

It should be noted that the first preset time period, the second preset time period, the third preset time period, the fourth preset time period, the first preset current value, and the second preset current value are pre-set in the control unit 11 by operation and maintenance personnel. The second preset current value is less than the maximum working current value that the heating system can withstand. Values of the first preset time period, the second preset time period, the third preset time period and the fourth preset time period, the first preset current value and the second preset current value are not fixed, which may be set to different values by the operation and maintenance personnel according to different scenarios.

The current control component 132 is used to adjust a resistance of the heating circuit 13.

The resistance is positively correlated with the heating temperature of the heating component, and the resistance is negatively correlated with the current passing through the heating circuit.

In some embodiments, the current control component may be a thermal fuse, a current fuse or a temperature control resistor. The thermal fuse and the current fuse are resettable fuses.

It should be noted that when the temperature of the thermal fuse reaches a certain temperature threshold, the thermal fuse opens. Subsequently, after the temperature of the thermal fuse decreases, the thermal fuse closes automatically. In a case where the current in the circuit through the current fuse reaches a certain current threshold, the current fuse opens. Subsequently, after the current in the circuit decreases, the current fuse closes automatically.

It can be understood that as the current in the heating circuit 13 increases, the resistance of the current control component 132 also increases. For example, if the current control component 132 is the current fuse, when the current in the heating circuit 13 increases to the safety current of the current fuse, the current fuse opens, which causes the resistance of the heating circuit 13 to be infinite (that is, the heating circuit 13 is open).

The control device 11 is used to control the power supply device 12 to adjust the current value of the heating current from the first current value to the second current value after detecting that the heating component 131 enters the non-conduction state from the energized state.

The second current value is less than the first current value.

In some embodiments, after the control device 11 controls the power supply device 12 to increase the current value of the heating current to the second preset current value, the control device 11 detects the current in the heating system 10. When the current in the heating system 10 suddenly decreases, the control device 11 determines that the resistance of the current control component 132 increases, and the heating component 131 enters the non-energized state from the energized state. Furthermore, the control device 11 controls the power supply device 12 to reduce the current value of the heating current from the second preset current value to the third preset current value, so as to continuously supply power to the heating circuit 13 with the heating current of the third preset current value. The third preset current value is less than the first preset current value.

In some embodiments, when the current in the heating system 10 suddenly decreases, the control device 11 controls the power supply device 12 to stop supplying power to the heating circuit 13.

For example, the current control component 132 is the current fuse, and the current value of the safety current of the current fuse is the second preset current value. After the control device 11 controls the power supply device 12 to increase the current value of the heating current to the second preset current value, the current fuse opens, so that the resistance of the heating circuit 13 is infinite, and the value of the current in the heating circuit 13 is zero. Correspondingly, the control device 11 determines that the heating component 131 enters the non-energized state from the energized state when detecting an abrupt change of the current in the heating circuit 13.

It can be understood that as the heating current provided by the power supply device 12 gradually increases, the temperature of the heating component 131 gradually increases. In a case where the power supply device 12 increases the current value of the heating current in the heating circuit to the second preset current value, the temperature of the heating component 131 reaches a high temperature, and the temperature of the camera increases at the same time, thus completing defrosting and defogging. In this case, the current control component 132 is turned off. Furthermore, the current control component 132 gradually returns to a turned-on state, which results in a normal heating current in the heating circuit 13. In this way, the heating component 131 heats the camera with a small heating current to perform defogging.

In the embodiments of the present disclosure, when the heating component 131 is energized, the heating component 131 is in a heating state and can provide heat for the camera to realize defrosting and defogging. When the heating component 131 is non-energized, the heating component 131 is in a non-heating state and stops providing heat.

In this way, the control device 11 controls a magnitude of the current supplied by the power supply device 12 to the heating circuit 13 to defrost and defog the camera. Moreover, the control device 11 senses the temperature of the heating component 131 by determining the change of the current control component 132. Therefore, in a case where the control device 11 detects that the current in the heating circuit 13 decreases, the control device 11 determines that the current control component 132 changes abruptly, and then determines that the temperature of the heating component 131 reaches a preset temperature, so that the defrosting and defogging of the camera is realized.

In another case, after the control device 11 controls the power supply device 12 to increase the current value of the heating current to the second preset current value, the control device 11 detects that the heating component 131 in the heating system 10 maintains the energized state (no abrupt change in the current in the heating circuit 11), and the control device 11 controls the power supply device 12 to increase the second preset current value to the fourth preset current value. If the control device 11 detects no abrupt change in the current in the heating circuit 11, the control device 11 determines that the heating circuit 13 is faulty. Next, the control device 11 controls the power supply device 12 to stop providing power within a preset fifth time period. Subsequently, the control device 11 controls the power supply device 12 to supply power to the heating circuit 13 with the heating current of a fifth preset current value.

It should be noted that the fifth preset time period and the fifth preset current value are pre-set in the control device 11 by the operation and maintenance personnel. The fifth preset current value and the third preset current value may be the same or different, which is not limited in the embodiments of the present disclosure.

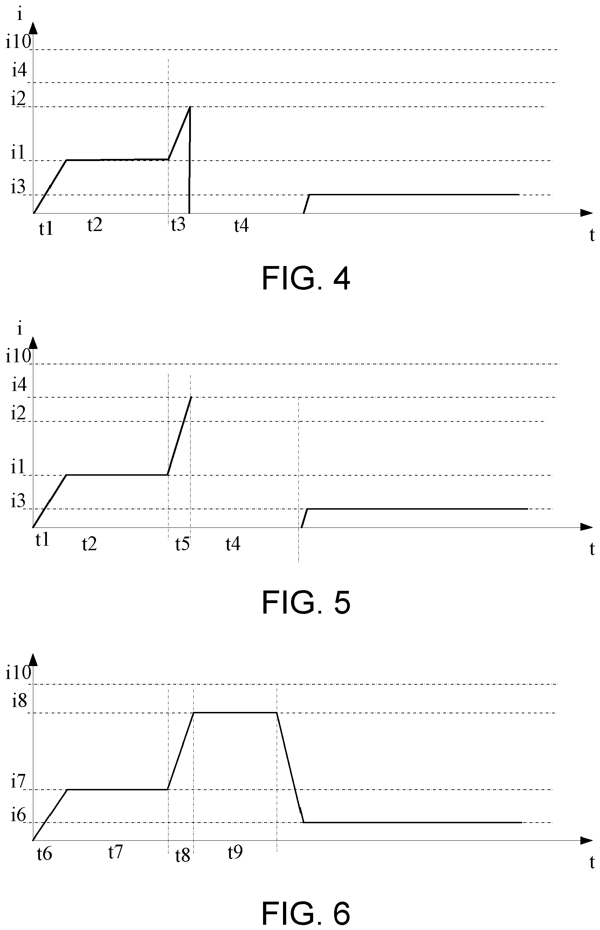

The control process of the control device 11 in the embodiments of the present disclosure will be described below. In a case where the heating circuit 13 operates normally, as shown in FIG. 4, when the heating system 10 is started, the control device 11 controls the power supply device 12 to increase the current value of the heating current to the first preset current value i1 within the first preset time period t1. Next, the control device 11 controls the power supply device 12 to supply power to the heating circuit 13 with the heating current of the first preset current value i1 within the second preset time period t2. Subsequently, the control device 11 controls the power supply device 12 to increase the first preset current value to the second preset current value i2 within the third preset time period t3, so as to supply power to the heating circuit 13 with the heating current of the second preset current value i2; and when the control device 11 detects that the current of the heating system 10 decreases abruptly, the control device 11 controls the power supply device 12 to stop supplying power within a time period t4. Finally, the control device 11 controls the power supply device 12 to supply power to the heating circuit 13 with the heating current of the third preset current value i3.

When the heating circuit 13 is abnormal, as shown in FIG. 5, when the heating system 10 is started, the control device 11 controls the power supply device 12 to increase the current value of the heating current to the first preset current value i1 within the first preset time period t1. Next, the control device 11 controls the power supply device 12 to supply power to the heating circuit 13 with the heating current of the first preset current value i1 within the second preset time period t2. Subsequently, the control device 11 controls the power supply device 12 to increase the first preset current value to the second preset current value i2 within a third preset time period t5, so as to supply power to the heating circuit 13 with the heating current of the second preset current value i2; and when the control device 11 detects that the current of the heating system 10 does not decrease abruptly, the control device 11 controls the power supply device 12 to increase the second preset current value i2 to the fourth preset current value i4. If the control device 11 detects that the current in the heating system 10 still does not decrease abruptly, the control device 11 determines that the heating circuit 13 is faulty. Next, the control device 11 controls the power supply device 12 to stop supplying power within the time period t4. Finally, the control device 11 controls the power supply device 12 to supply power to the heating circuit 13 with the heating current of the fifth preset current value i5.

In the description of the above solutions, the resistance of the current control component 132 in the heating circuit 13 increases abruptly or the current control component 132 in the heating circuit 13 is turned off, so that the current detected by the control device 11 decreases, and the control device 11 determines the energized state of the heating component 131. The embodiments of the present disclosure further provide the following solutions by taking an example in which the current control component 132 in the heating circuit 13 operates normally.

In a case where the heating circuit 13 is normal, as shown in FIG. 6, when the heating system 10 is started, the control device 11 controls the power supply device 12 to increase the current value of the heating current to a sixth preset current value i6 within a sixth preset time period t6. Next, the control device 11 controls the power supply device 12 to supply power to the heating circuit 13 with the heating current of the sixth preset current value i6 within a seventh preset time period t7. Subsequently, the control device 11 controls the power supply device 12 to increase the sixth preset current value i6 to a seventh preset current value i7 within an eighth preset time period t8, so as to supply power to the heating circuit 13 with the heating current of the seventh preset current value i7; then, the control device 11 controls the power supply device 12 to stop supplying power within a time period t9. Finally, the control device 11 controls the power supply device 12 to supply power to the heating circuit 13 with the heating current of an eighth preset current value i8.

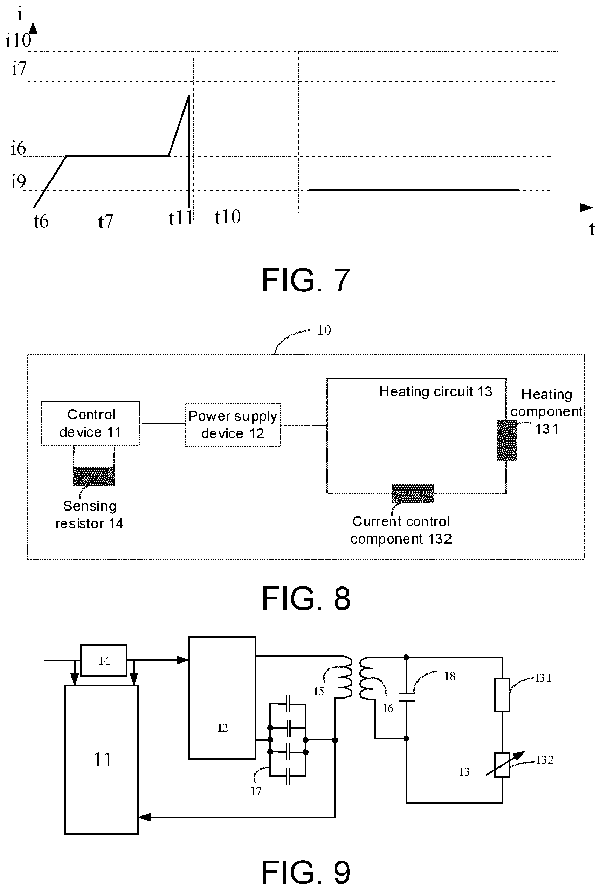

In a case where the heating circuit 13 is abnormal, as shown in FIG. 7, when the heating system 10 is started, the control device 11 controls the power supply device 12 to increase the current value of the heating current to the sixth preset current value i6 within the sixth preset time period t6. Next, the control device 11 controls the power supply device 12 to supply power to the heating circuit 13 with the heating current of the sixth preset current value i6 within the seventh preset time period t7. Subsequently, when the control device 11 controls the power supply device 12 to increase the sixth preset current value i6 to the seventh preset current value i7, so as to supply power to the heating circuit 13 within an eighth preset time period t11; and if the control device 11 detects that the current in the heating system 10 decreases, the control device 11 controls the power supply device 12 to stop supplying power within a time period t10. Finally, the control device 11 controls the power supply device 12 to supply power to the heating circuit 13 with the heating current of a ninth preset current value i9.

In some embodiments, as shown in FIGS. 4, 5, 6 and 7, a current of a current value i10 is the maximum current that the circuit in the heating system 10 can withstand. The control device 11 may be a microcontroller unit (MCU). The power supply device 12 may be a power management integrated circuit (PMIC). The heating component 131 may be a heating wire, a heating film, or other heating component, which is not limited in the embodiments of the present disclosure.

It can be understood that in the technical solution(s) in which the control device 11 controls the current control component 132 to not sudden change during the heating process, the heating circuit 13 can operate stably, thereby improving the service life of the heating system 10.

The embodiments of the present disclosure provide the heating system that may have the following beneficial effects. The power supply device provides electric energy for the heating component and the current control component in the heating circuit, so that the heating component heats the camera. As the heating current increases, when the temperature of the heating component reaches a certain temperature, the resistance of the heating circuit increases, which causes the current of the heating circuit to decrease. When the current control component is turned off, the heating component enters the non-energized state from the energized state. After the control device detects that the heating component enters to the non-energized state from the energized state, the heating current is reduced, so that the heating component heats the camera at a low temperature.

In this way, the heating system in the embodiments of the present disclosure is used to defrost and defog the camera. Firstly, the power supply device is controlled to provide the current of a high current value for the heating component, which causes the temperature of the camera to be increased quickly, thereby rapidly defrosting and defogging. Next, as the heating current increases, when the temperature of the heating component is high, the current control component adjusts the current of the heating circuit, and when the current control component is turned off, the heating component enters the non-energized state from the energized state. Finally, after the control device detects that the heating component enters the non-energized state from the energized state, the control device determines that the heating component has performed the defrosting and defogging rapidly, and then the heating component continues to defog the camera with a small current. Therefore, the technical problem of how to control the heating of the heating wire or the heating film to well perform defrosting and defogging is solved.

In some embodiments, as shown in FIG. 8, the heating system 10 further includes a sensing resistor 14.

The control device 11 is connected to the sensing resistor 14.

The control device 11 is further used to obtain a voltage difference between two terminals of the sensing resistor 14, and determine that the heating component 131 enters the non-energized state from the energized state in a case where the voltage difference is less than or equal to a first preset voltage threshold.

It can be understood that, when the current control component 132 operates normally, the voltage difference between the two terminals of the sensing resistor 14 is large. As the current increases, the current control component 132 is turned off or the resistance of the current control component 132 increases, so that the voltage difference between the sensing resistor 14 decreases. In this way, when the voltage difference is less than or equal to the first preset voltage threshold, it is determined that the heating component 131 enters the non-energized state from the energized state.

In some embodiments, the power supply device 12 is further used to detect the current value of the heating current, and adjust a direct current (DC) bias voltage based on the current value.

The control device 11 is further used to detect the DC bias voltage, and determine that the heating component 131 enters the non-energized state from the energized state in a case where the DC bias voltage is less than or equal to a second preset voltage threshold.

For example, the power supply device 12 has a current detection function. When it is detected that the heating current decreases abruptly, the DC bias voltage in the power supply device 12 is less than or equal to the second preset voltage threshold. Correspondingly, the control device 11 determines that the heating component 131 enters the non-energized state from the energized state when the DC bias voltage is less than or equal to the second preset voltage threshold.

In some embodiments, as shown in FIG. 9, the heating system 10 further includes a first coil 15 and a second coil 16. The first coil 15 is connected to the power supply device 12 and the control device 11. The second coil 16 is connected in series with the heating component 131.

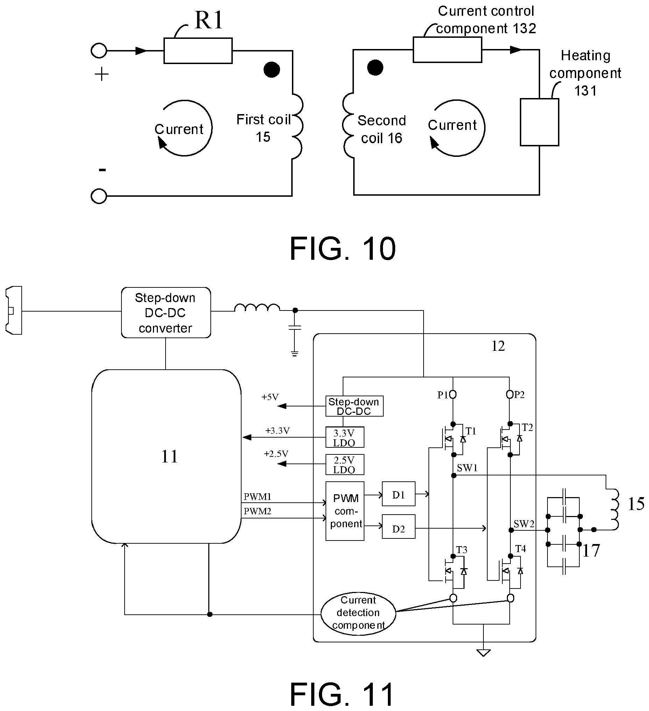

In the embodiments of the present disclosure, as shown in FIG. 10, the heating system 10 may be equivalent to an air-core transformer system. Since a core of a transformer is a non-magnetic material, the transformer is referred to as an air-core transformer. The air-core transformer is a device that transmits energy or signals from one circuit to another circuit through mutual inductance. The air-core transformer consists of two coils with mutual inductance. A primary coil (the first coil 15) is connected to the power supply, the primary coil is connected to a resistor, and a secondary coil (the second coil 16) is connected in the heating circuit 13.

A load connected to the secondary coil of the air-core transformer may be equivalent to an impedance on the primary coil side in the form of mutual inductance. In

FIG. 10, a circuit where the first coil is located is the power supply circuit (a primary circuit), and a circuit where the second coil is located is the heating circuit (a secondary circuit). The impedance in the power supply circuit is expressed by Formula 10.

$$Z11 = R_1 + R_{jw1} \qquad \text{Formula 10}$$

Here, $Z11$ is the resistance of the power supply circuit, $R_1$ is a resistance of a resistor R1 in the power supply circuit, and $R_{jw1}$ is an internal resistance of the first coil in the power supply circuit.

When the second coil operates, the heating component 131 in the heating circuit 13 has a fixed resistance, and an equivalent resistance of the power supply circuit at this time is expressed by Formula 11.

$$Zi = Z11 + Z_{ref} \qquad \text{Formula 11}$$

Here, $Zi$ is the equivalent resistance of the power supply circuit, $Z11$ is the resistance of the power supply circuit, and $Z_{ref}$ is the resistance in the heating circuit 13.

If the load in the heating circuit 13 is open, the resistance corresponding to the load is infinite, and $Z_{ref}$ is zero. In this case, the equivalent resistance of the power supply circuit is equal to the impedance in the power supply circuit.

The equivalent resistance of the power supply circuit is described below. If the current control component 132 is a current fuse or a thermal fuse, the equivalent resistance of the power supply circuit is expressed by the following and Formula 13. In a case where the current control component 132 operates normally, the equivalent resistance of the power supply circuit meets Formula 12. In a case where the current control component 132 is open, the equivalent resistance of the power supply circuit meets Formula 13.

$$Zi = \frac{U_1}{I_1} = R_1 + \mathrm{R}_{jw1} + \frac{\omega^2 m^2}{Z22} \qquad \text{Formula 12}$$

$$Zi = \frac{U_1}{I_1} = R_1 + \mathrm{R}_{jw1} \qquad \text{Formula 13}$$

Here, $Zi$ is the equivalent resistance of the power supply circuit, $U_1$ is the power supply voltage of the power supply device 12, $I_1$ is the current of the power supply circuit, $R_1$ is the resistance of the resistor R1 in the power supply circuit, $R_{jw1}$ is the internal resistance of the first coil in the power supply circuit, $Z22$ is the resistance of the load, $\omega$ is the mutual inductance magnetic flux linkage of the second coil, and $m$ is the coefficient of mutual inductance of the second coil.

It can be known from the above Formula 12 and Formula 13 that, before and after the current control component 132 in the heating circuit 13 is open, the equivalent resistance of the power supply circuit will change, resulting in changes in the voltage and current of the power supply circuit. In a case where the heating circuit 13 is open, the power supply circuit generates an inductance with a large self-inductance, which causes a large inductive reactance in the power supply circuit, resulting in the decrease in the current in the power supply circuit. In this way, the control device 11 detects a voltage or current of a key point of the power supply circuit and thus may detect the state of the current control component 132 in the heating circuit 13, and controls the power supply device 12 to supply power to the heating circuit 13 according to the state of the current control component 132 in the heating circuit 13.

In the technical solution in which the heating system 10 includes the first coil 15 and the second coil 16, the embodiments of the present disclosure includes the following three technical solutions for detecting the heating condition of the heating circuit 13.

In the first solution, the control device 11 determines the state of the current control component 132 by detecting the DC bias voltage in the power supply device 12, so as to determine the heating state of the heating component 131.

For example, the power supply device 12 can provide a high-efficiency energy transfer. That is, the energy of the first coil 15 is transferred to the second coil 16 through a coil coupling manner, and during the energy transfer process, except for the environmental leakage of the electromagnetic energy, the energy transfer of the two coils is lossless, and the efficiency of the energy transfer reaches more than 90%. Therefore, in a case where the current in the heating circuit 13 changes greatly, the heating current of the power supply circuit also changes greatly.

As shown in FIG. 11, the power supply device 12 includes low dropout (LDO) regulators (for example, FIG. 11 shows a 3.3V LDO regulator and a 2.5V LDO regulator, and other voltage LDO regulators may also be used in practical applications), overcurrent protection components (e.g., a first overcurrent protection component P1 and a second overcurrent protection component P2 shown in FIG. 11), a current detection component, driving components (e.g., a driving component D1 and a driving component D2 shown in FIG. 11), a step-down DC-DC component, triodes (e.g., a first triode T1, a second triode T2, a third triode T3, and a fourth triode T4 shown in FIG. 11), a pulse-width modulation (PWM) component and control terminals SW (e.g., a first control terminal SW1 and a second control terminal SW2 shown in FIG. 11).

The 3.3V LDO regulator, the 2.5V LDO regulator and the step-down DC-DC component are connected to the control device 11. The PWM component is connected to the control device 11 (a first PWM pin PWM1 and a second PWM pin PWM2 are connected to the PWM component in FIG. 11). The PWM component is connected to the driving component D1 and the driving component D2. The first overcurrent protection component P1 and the first triode T1 are connected in series, and the second overcurrent protection component P2 and the second triode T2 are connected in series. The current detection component and the third triode T3 are connected in series, and the current detection component is connected to the third triode T3 and the fourth triode T4. The first control terminal SW1 is connected to the first triode T1, and the second control terminal SW2 is connected to the third triode T3. The current detection component is connected to the control device 11 through a pin (e.g., an ISNS pin).

In some embodiments, the control device 11 is further connected to a step-down DC-DC converter.

For example, the power supply device 12 adopts a chip of SCT63140, the DC bias voltage of the power supply device 12 meets the following Formula 14.

$$V_z = 600mV + I_s \times 1V/A \qquad \text{Formula 14}$$

Here, $V_Z$ is the DC bias voltage of the power supply device 12, and $I_s$ is a current of the first control terminal SW1 or the second control terminal SW2.

In this way, in a case where the current in the second coil 16 suddenly decreases, the first control terminal SW1 and the second control terminal SW2 of the power supply device 12 stop operating, and the DC bias voltage of the power supply device 12 is 600 mV. Correspondingly, the control device 11 determines the current in the power supply circuit by detecting the DC bias voltage of the power supply device 12 through the ISNS pin, and then determines the current in the heating circuit 13.

In a second solution, the control device 11 obtains the voltage difference between the two ends of the sensing resistor, so as to determine the operation state (e.g., the heating state) of the heating component 131 in the heating circuit 13.

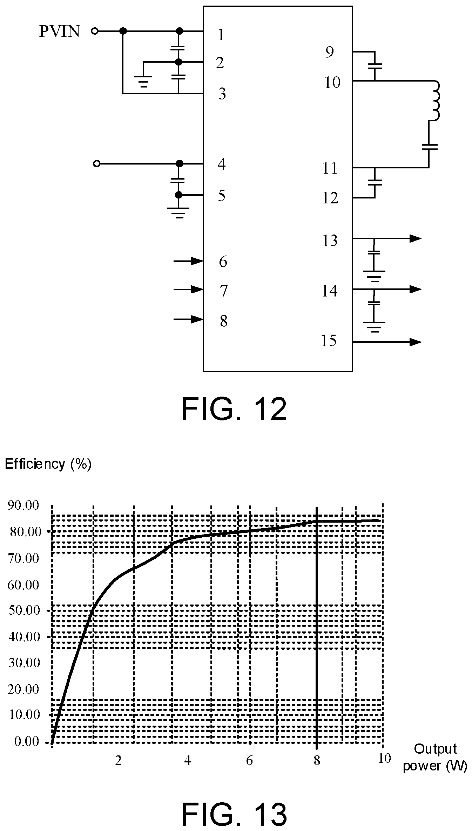

As shown in FIG. 9, the resistance of the current control component 132 is set to be zero in a turned-on state and infinite in a turned-off state. The power supply circuit and the heating circuit 13 may be regarded as a coupling transformer model or an energy transfer model. As shown in FIG. 12, considering an example in which the chip of the power supply device 12 is a wireless charging chip (e.g., the chip of SCT63140), the functions of the pins of the power supply device 12 are shown in Table 1.

Table 1

| Pin number | Pin name | Function |
|---|---|---|
| 1 | PIN1 | Input supply voltage of half-bridge field effect transistors (FETs) (which are denoted by Q1 and Q2) |
| 2 | PGND | PGND is a common power ground of the full bridge and internally connected to sources of low-side FETs (which are denoted by Q2 and Q4). |
| 3 | PIN2 | Input supply voltage of half-bridge FETs (which are denoted by Q3 and Q4) |
| 4 | VIN | Power supply input |
| 5 | GND | Common ground pin |
| 6 | EN | Precision enable. Use an external resistor-divider to set a turn-on threshold. Connect the EN pin to PVIN, the device can be automatically enabled |
| 7 | PWM1 | If logic high, turn off the low-side FET Q2 and turn on the high-side FET Q1. If logic low, turn off the high-side FET Q1 and turn on the low-side FET Q2. When PWM input is in a tri-state mode, both Q1 and Q2 are turned off |
| 8 | PWM2 | If logic high, turn off the low-side FET Q4 and turn on the high-side FET Q3. If logic low, turn off the high-side FET Q3 and turn on the low-side FET Q4. When PWM input is in the tri-state mode, both Q3 and Q4 are turned off |
| 9 | BST1 | Power supply bias for the high-side power MOSFET gate driver of Q1. Connect a 0.1 μF capacitor from BST1 pin to SW1 pin |
| 10 | SW1 | Switching node of the half-bridge FETs Q1 and Q2 |
| 11 | SW2 | Switching node of the half-bridge FETs Q3 and Q4 |
| 12 | BST2 | Power supply bias for the high-side power MOSFET gate driver of Q3. Connect a 0.1 μF capacitor from BST2 pin to SW2 pin |
| 13 | VDD | Output voltage of a buck converter Connect a 22 μF capacitor from VDD pin to the GND pin VDD is also the input power supply for gate driver of power stage and 3.3 V power supply |
| 14 | V3P3 | 3.3 V LDO output Connect an 1 μF capacitor to the ground |
| 15 | ISIN | Current detection output. A voltage of the pin is proportional to the input current |

The relationship between the efficiency and output power of the wireless charging chip is shown in FIG. 13.

In this way, the power of the first coil 15 and the second coil 16 satisfies Formula 15.

$$PL2 = PL1 \times \eta 1 \qquad \text{Formula 15}$$

Here, $PL1$ is the power transmitted by the first coil 15, $PL2$ is the power received by the second coil 16, and $\eta 1$ is the transmission efficiency. Since $\eta 1$ is related to the output power in FIG. 13, $\eta 1$ is a known constant.

In FIG. 9, the first coil 15 is further connected to a capacitor group (i.e., a first capacitor) 17 to constitute an inductor-capacitor (LC) circuit. An operation efficiency of the power supply device 12 is $\eta 2$. When the LC circuit is in a resonant state, the output power of the power supply device 12 meets Formula 16.

$$PL1 = \eta 2 \times Vi \times It \qquad \text{Formula 16}$$

Here, $PL1$ is the power transmitted by the first coil 15, $Vi$ is the voltage input to the power supply device 12, $It$ is the current input to the power supply device 12, and $\eta 2$ is the conversion efficiency of the power supply device 12.

In some embodiments, as shown in FIG. 9, the heating circuit 13 further includes a second capacitor 18. The second capacitor 18 and the second coil 16 are connected in parallel.

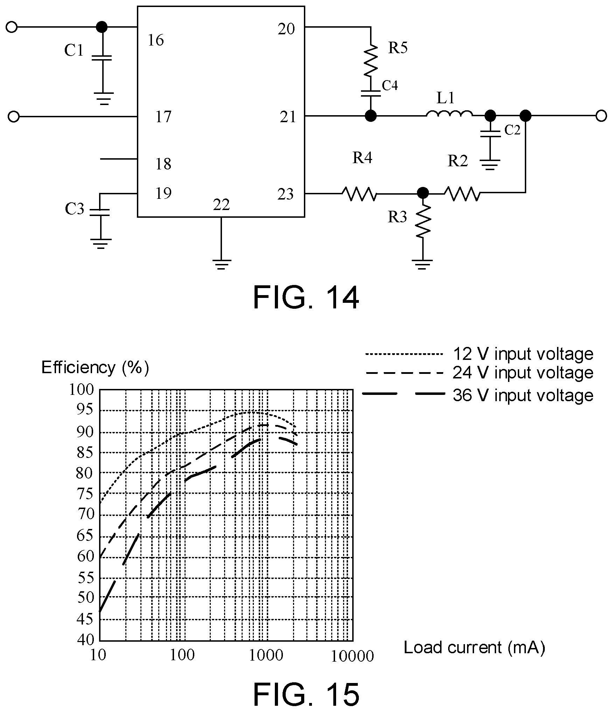

In addition, considering an example in which the step-down DC-DC component is a power supply conversion chip, the structure of the power supply conversion chip is shown in FIG. 14, and the functions of the pins are shown in Table 2. The power supply conversion chip may be a chip of MPQ4420H.

Table 2

| Pin number | Pin name | Function |
|---|---|---|
| 16 | IN | Power supply input of the control circuit |
| 17 | EN/SYNC | Precision enable. Use an external resistor-divider to set a turn-on threshold. Connect the EN pin to PVIN, the device can be automatically enabled |
| 18 | PG | Power good output (open drain) |
| 19 | VCC | Power ground pin |
| 20 | BST | Supply rail for the high-side gate driver. |
| 21 | SW | Switching node |
| 22 | GND | Common ground pin |
| 23 | FB | Feedback voltage sensing input |

In FIG. 14, the power supply conversion chip further includes: capacitors C1, C2, C3 and C4, resistors R2, R3, R4 and R5, and an inductor L1.

The relationship between the efficiency and the output power of the power conversion chip is shown in FIG. 15.

In this way, the voltage difference between the two ends of the sensing resistor is measured by the current, which may be expressed by Formula 17.

$$V_c = R_C \times I_C \qquad \text{Formula 17}$$

Here, $V_c$ is the voltage difference, $R_C$ is the resistance of the sensing resistor, and $I_C$ is the current passing through the sensing resistor.

Based on the energy transfer system, it can be known that

$$PL1 = PL1 \div \eta 1 = I_R \times I_R \times R_L \div \eta 1 \qquad \text{Formula 18}$$

Here, $PL1$ is the power transmitted by the first coil 15, $PL2$ is the power received by the second coil 16, $\eta 1$ is the transmission efficiency, $I_R$ is the current in the heating circuit 13, and $R_L$ is the resistance of the heating component 131.

According to the above Formula 17, Formula 19 and Formula 20, Formula 21 is obtained.

$$PZ = PL1 \div \eta 2 = I_R \times I_R \times R_L \div (\eta 1 \times \eta 2) \qquad \text{Formula 19}$$

$$It = PZ \div Vi \qquad \text{Formula 20}$$

Here, $PZ$ is the power input to the power supply device 12, $Vi$ is the voltage input to the power supply device 12, $It$ is the current input to the power supply device 12, $\eta 2$ is the conversion efficiency of the power supply device 12, $\eta 1$ is the transmission efficiency of power from the first coil 15 to the second coil 16, $I_R$ is the current in the heating circuit 13, and $R_L$ is the resistance of the heating component 131.

$$V_c = R_C \times I_R \times I_R \times R_L \div (\eta 1 \times \eta 2 \times Vi) \qquad \text{Formula 21}$$

Here, $V_c$ is the voltage difference, $R_C$ is the resistance of the sensing resistor, $I_R$ is the current in the heating circuit 13, $R_L$ is the resistance of the heating component 131, $\eta 2$ is the conversion efficiency of the power supply device

12, $\eta 1$ is the transmission efficiency of power from the first coil 15 to the second coil 16, and $Vi$ is the voltage input to the power supply device 12.

In this way, when $R_C$, $\eta 2$, $\eta 1$, $R_L$ and $Vi$ are known, the control device 11 determines that the current in the heating circuit 13 decreases by detecting that the voltage difference of the sensing resistor decreases, so as to determine the operation state of the heating component 131.

For example, in a case where the power received by the second coil 16 is 2 W and the transmission efficiency of the power supply device 12 is 90%, regardless of loss, the power supply device 12 detects that the current in the power supply circuit is 500 mA; and if the resistance of the sensing resistor is 1 Ω, the voltage difference is 0.5 V. Then, if the current control component 132 in the heating circuit 13 is open, the power transmitted by the power supply device 12 is 0 W In this case, the current in the power supply circuit will reach to 100 mA, and the voltage difference is 0.1 V.

In this way, when the control device 11 detects that the voltage difference is less than the first preset voltage threshold, the control device 11 determines that the heating component 131 does not heat. Therefore, the control device 11 controls the power supply device 12 to adjust the heating current.

In a third solution, the control device 11 detects an operation waveform of the LC circuit, so as to determine the operation state of the heating component 131 in the heating circuit 13.

For example, by detecting the change of the voltage between the first coil 15 and the capacitor group 17 that are connected in series, it is detected that the change of the charging and discharging waveform of the LC circuit caused by the change of the current in the second coil 16.

When the heating component 131 heats the camera normally, the first coil 15 and the capacitor group 17 constitute the LC circuit. The power supply device 12 drives the first coil 15 with a switching signal of a fixed frequency (e.g., an LC resonance frequency). The transmission capability of the first coil 15 to the second coil 16 is reflected in a duty ratio of an LC oscillation waveform (i.e., an oscillation waveform of the LC circuit). The larger the current in the second coil 16, the higher the duty ratio of the LC oscillation waveform. When the current in the second coil 16 is zero, the duty ratio of the LC oscillation waveform is small.

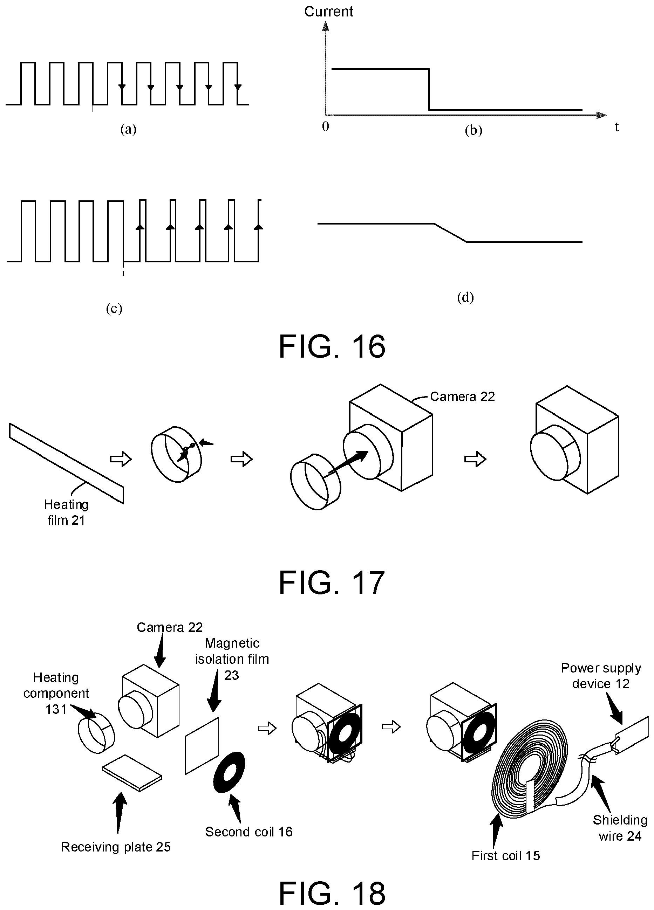

As shown in FIG. 16, when the current of the second coil 16 changes from a normal value to zero, the duty ratio of the LC oscillation waveform of the LC circuit changes. (a) in FIG. 16 shows the operation frequency of the LC circuit, (b) in FIG. 16 shows an effective value of the current of the second coil 16, (c) in FIG. 16 shows the LC oscillation waveform, and (d) in FIG. 16 shows a detection waveform for the control device 11 to detect the LC oscillation waveform.

In this way, the control device 11 determines the duty ratio of the LC oscillation waveform of the LC circuit by the detection waveform, so as to detect the energized state of the heating component 131.

In addition, as shown in FIG. 17, considering an example in which the heating component 131 is the heating film 21, the heating film is fixed in a circular shape. Then, the fixed heating film is sleeved on the camera 22.

As shown in FIG. 18, the heating film 21 is fixed on the camera 22, the second coil 16 is fixed on a side of the camera 22, and a magnetic isolation film 23 is provided between the second coil 16 and the camera 22. The first coil 15 is connected to the power supply device 12, and a shielding wire 24 is provided between the first coil 15 and the power supply device 12. In addition, when the heating film 21 is mounted, a receiving plate 25 is also mounted.

The solutions provided in the embodiments of the present disclosure are mainly introduced from a product perspective. In order to achieve the above functions, devices or electronic apparatuses each may include corresponding hardware structures and/or software modules for performing the functions. Those skilled in the art may easily realize that the embodiments of the present disclosure may be implemented in hardware or in a combination of hardware and computer software with reference to units and algorithm steps of the examples described in the embodiments disclosed herein.

In order to control the heating of the heating wire or the heating film to well perform defrosting and defogging, the embodiments of the present disclosure provide a method for controlling a heating system, which is applied to the heating system 10 in the above embodiments.

The control device 11 controls the power supply device 12 to provide the heating current to the heating circuit 13, so that the heating circuit 13 heats the camera 22 through the heating component 131.

In a possible implementation manner, when the heating system 10 is started, the control device 11 controls the power supply device 12 to increase the current value of the heating current to the first preset current value within the first preset time period. Then, the control device 11 controls the power supply device 12 to supply power to the heating circuit 13 with the heating current of the first preset current value within the second preset time period. Next, the control device 11 controls the power supply device 12 to increase the first preset current value to the second preset current value within the third preset time period, so as to supply power to the heating circuit 13.

In some embodiments, when the heating system 10 is started, the control device 11 controls the power supply device 12 to increase the current value of the heating current to the second preset current value within a fourth preset time period, so as to supply power to the heating circuit 13.

In another possible implementation manner, when the heating system 10 is started, the control device 11 controls the power supply device 12 to increase the current value of the heating current to the sixth preset current value i6 within the sixth preset time period t6. Next, the control device 11 controls the power supply device 12 to supply power to the heating circuit 13 with the heating current of the sixth preset current value i6 within the seventh preset time period t7. Subsequently, the control device 11 controls the power supply device 12 to increase the sixth preset current value i6 to the seventh preset current value i7 within the eighth preset time period t8, so as to supply power to the heating circuit 13 with the heating current of the seventh preset current value i7; then, the control device 11 controls the power supply device 12 to stop supplying power within the time period t9. Finally, the control device 11 controls the power supply device 12 to supply power to the heating circuit 13 with the heating current of the eighth preset current value i8.

After the control device 11 detects that the heating component 131 enters the non-energized state from the energized state, the control device 11 controls the power supply device 12 to adjust the current value of the heating current from the first current value to the second current value.

The second current value is less than the first current value. The energized state of the heating component is determined according to the resistance of the current control component. The resistance of the current control component is negatively correlated with the current passing through the heating circuit.

In a possible implementation, the control device 11 controls the power supply device 12 to increase the first preset current value to the second preset current value i2 to supply power to the heating circuit 13 within the third preset time period t3; in a case where the control device 11 detects that the current of the heating system suddenly decreases, the control device 11 controls the power supply device 12 to stop supplying power within the time period t4. Finally, the control device 11 controls the power supply device 12 to supply power to the heating circuit 13 with the heating current of the third preset current value i3.

In a possible implementation method, when the control device 11 controls the power supply device 12 to increase the sixth preset current value to the seventh preset current value i7 within the eighth preset time period t8, so as to supply power to the heating circuit 13, if it is detected that the current in the heating system 10 suddenly decreases, the control device 11 controls the power supply device 12 to stop supplying power within the time period t10. Finally, the control device 11 controls the power supply device 12 to supply power to the heating circuit 13 with the heating current of the ninth preset current value i9.

In some embodiments, the control device 11 controls the power supply device 12 to stop supplying power to the heating circuit 13, and controls the power supply device 12 to supply power to the heating circuit 13 with the heating current of the second current value after a preset time period.

In some embodiments, the control device 11 controls the power supply device 12 to adjust the current value of the heating current from the first current value to the third current value in a case where the current value of the heating current is the first current value and it is detected that the heating component is in the energized state. The third current value is greater than the first current value.

Then, the control device 11 detects the energized state of the heating component 131 in a case where the power supply device 12 adjusts the current value of the heating current from the first current value to the third current value. If it is detected that the heating component 131 does not enter the non-energized state from the energized state, the control device 11 controls the power supply device 12 to stop supplying power. Further, the control device 11 controls the power supply device 12 to supply power to the heating circuit 13 with the heating current of the third preset current value i3 after the preset time period t11.

In some embodiments, in order to detect the energized state of the heating component 131, the method provided in the embodiments of the present disclosure further includes: the control device 11 obtaining the voltage difference between the two ends of the sensing resistor 14, and determining that the heating component 131 enters the non-energized state from the energized state in a case where the voltage difference is less than or equal to the first preset voltage threshold.

In some embodiments, in order to detect the energized state of the heating component 131, the method provided in the embodiments of the present disclosure further includes: the control device 11 detecting the DC bias voltage of the power supply device, and determining that the heating component 131 enters the non-energized state from the energized state in a case where the DC bias voltage is less than or equal to the second preset voltage threshold. The DC bias voltage is positively correlated with the heating current.

In some embodiments, in order to detect the energized state of the heating component 131, the method provided in the embodiments of the present disclosure further includes: the control device 11 detecting the oscillation waveform of the LC circuit, and determining that the heating component 131 enters the non-energized state from the energized state in a case where the duty ratio of the oscillation waveform is less than a first preset threshold.

The above are only specific embodiments of the present disclosure, but the scope of protection of the present disclosure is not limited thereto, and any person skilled in the art may conceive of variations or replacements within the technical scope of the present disclosure, which shall fall within the protection scope of the present disclosure. Therefore, the protection scope of the present disclosure should be determined by the protection scope of the claims.

## Claims

1. A heating system (10), used to heat a camera (22), the camera (22) including an optical lens and a photosensitive component, the heating system (10) comprising a control device (11), a power supply device (12) and a heating circuit (13), wherein

   the heating circuit (13) includes a heating component (131) and a current control component (132);
   the power supply device (12) is used to provide a heating current for the heating circuit (13);
   the heating component (131) is used to heat the camera (22) with the heating current;
   the current control component (132) is used to adjust a resistance of the heating circuit (13); the resistance is negatively correlated with a current passing through the heating circuit (13);
   the control device (11) is used to control the power supply device (12) to adjust a current value of the heating current from a first current value to a second current value after detecting that the heating component (131) enters a non-energized state from an energized state; and the second current value is less than the first current value.

2. The heating system (10) according to claim 1, further comprising a sensing resistor (14), wherein
   the control device (11) is further used to obtain a voltage difference between two ends of the sensing resistor (14), and determine that the heating component (131) enters the non-energized state from the energized state in a case where the voltage difference is less than or equal to a first preset voltage threshold.

3. The heating system (10) according to claim 1, wherein the power supply device (12) is further used to detect the current value of the heating current, and adjust a direct current bias voltage based on the current value;
   the control device (11) is further used to detect the direct current bias voltage, and determine that the heating component (131) enters the non-energized state from the energized state in a case where the direct current bias voltage is less than or equal to a second preset voltage threshold.

4. The heating system (10) according to any one of claims 1 to 3, further comprising:

   a first coil (15) used to receive the heating current to create a magnetic field;
   a second coil (16) used to generate an induced current due to the magnetic field and supply power to the heating circuit (13) with the induced current.

5. The heating system (10) according to claim 4, further comprising a first capacitor, wherein

   the first capacitor is electrically connected to the first coil (15) to constitute an inductor-capacitor, LC, circuit; and the control device (11) is further used to detect an oscillation waveform of the LC circuit, and determine that the heating component (131) enters the non-energized state from the energized state when a duty ratio of the oscillation waveform is less than a first preset threshold.

6. The heating system (10) according to claim 4, wherein the heating circuit (13) further includes a second capacitor (18) connected in parallel with the second coil (16).

7. The heating system (10) according to claim 4, wherein the heating component (131) is a heating film (21), and the heating film (21) is configured to be fixed on the camera (22) in a circular shape;

   the second coil (16) is configured to be fixed on a side of the camera (22), and a magnetic isolation film (23) is provided between the second coil (16) and the camera (22);
   the first coil (15) is connected to the power supply device (12), and a shielding wire (24) is provided between the first coil (15) and the power supply device (12).

8. The heating system (10) according to any one of claims 1 to 7, wherein the power supply device (12) includes a low dropout, LDO, regulator, a first overcurrent protection component (P1), a second overcurrent protection component (P2), a current detection component, a driving component (D1, D2), a step-down direct current-direct current, DC-DC, component, a first triode (T1), a second triode (T2), a third triode (T3), a fourth triode (T4), a pulse-width modulation, PWM, component, a first control terminal (SW1) and a second control terminal (SW2);
   wherein the LDO regulator, the step-down DC-DC component, and the PWM component are all connected to the control device (11); the PWM component is connected to the driving component (D1, D2); the first overcurrent protection component (P1) is connected in series with the first transistor triode (T1); the second overcurrent protection component (P2) is connected in series with the second triode (T2); the current detection component is connected in series with the third triode (T3) and the fourth triode (T4); the first control terminal (SW1) is connected to the first triode (T1); the third triode (T3) is connected to the second control terminal (SW2); and the current detection component is connected to the control device (11).

**9.** A method for controlling a heating system (10), applied to the heating system (10) according to any one of claims 1 to 8, the method comprising:

controlling the power supply device (12) to provide the heating current for the heating circuit (13), so that the heating component (131) heats the camera (22) with the heating current; and
controlling the power supply device (12) to adjust the current value of the heating current from the first current value to the second current value after detecting that the heating component (131) enters the non-energized state from the energized state;
wherein the second current value is less than the first current value, the energized state of the heating component (131) is determined according to the resistance of the current control component (132), and the resistance is negatively correlated with the current passing through the heating circuit (13).

**10.** The method according to claim 9, wherein controlling the power supply device (12) to adjust the current value of the heating current from the first current value to the second current value includes:

controlling the power supply device (12) to stop supplying power to the heating circuit (13); and
controlling the power supply device (12) to supply power to the heating circuit (13) with the heating current of the second current value after a preset time period.

**11.** The method according to claim 9, further comprising:
in a case where the current value of the heating current is the first current value and the heating component (131) in the energized state is detected, controlling the power supply device (12) to adjust the current value of the heating current from the first current value to a third current value, the third current value being greater than the first current value.

**12.** The method according to any one of claims 9 to 11, wherein the heating system (10) further includes a sensing resistor (14); the method further comprising:

obtaining a voltage difference between two ends of the sensing resistor (14); and
in a case where the voltage difference is less than or equal to a first preset voltage threshold, determining that the heating component (131 enters the non-energized state from the energized state.

**13.** The method according to any one of claims 9 to 11, further comprising:

detecting a direct current bias voltage of the power supply device (12); and
in a case where the direct current bias voltage is less than or equal to a second preset voltage threshold, determining that the heating component (131) enters the non-energized state from the energized state, the direct current bias voltage being positively correlated with the heating current.

**14.** The method according to any one of claims 9 to 11, wherein the heating system (10) further includes a first capacitor and a first coil (15), the first capacitor is electrically connected to the first coil (15) to constitute an inductor-capacitor, LC, circuit; the method further comprising:

detecting an oscillation waveform of the LC circuit; and
in a case where a duty ratio of the oscillation waveform is less than a first preset threshold, determining that the heating component (131) enters the non-energized state from the energized state.

Coil 1
Coil 2
N1
N2

FIG. 1

Coil 1
Coil 2
Φ11
Φ21
$N_1$
$N_2$
$i_1$
$i_2$

FIG. 2

10
Control device 11
Power supply device 12
Heating circuit 13
Heating component 131
Current control component 132

FIG. 3

i
i10
i4
i2
i1
i3
t1
t2
t3
t4
t

FIG. 4

i
i10
i4
i2
i1
i3
t1
t2
t5
t4
t

FIG. 5

i10
i8
i7
i6
t6
t7
t8
t9
t

FIG. 6

i
i10
i7
i6
i9
t6
t7
t11
t10
t

FIG. 7

10
Control device 11
Power supply device 12
Heating circuit 13
Heating component 131
Sensing resistor 14
Current control component 132

FIG. 8

14
11
12
15
16
18
131
17
13
132

FIG. 9

R1
+
-
Current
First coil
15
Current control
component 132
Second
coil 16
Current
Heating
component
131

FIG. 10

Step-down
DC-DC
converter
11
12
+5V
+3.3V
+2.5V
Step-down
DC-DC
3.3V
LDO
2.5V
LDO
PWM1
PWM2
PWM
com-
ponent
D1
D2
P1
P2
T1
T2
SW1
SW2
T3
T4
15
17
Current
detection
component

FIG. 11

PVIN
1
2
3
4
5
6
7
8
9
10
11
12
13
14
15

FIG. 12

Efficiency (%)
90.00
80.00
70.00
60.00
50.00
40.00
30.00
20.00
10.00
0.00
2
4
6
8
10
Output power (W)

FIG. 13

C1
16
20
R5
C4
L1
17
21
C2
18
R4
R2
19
22
23
C3
R3

FIG. 14

12 V input voltage
24 V input voltage
36 V input voltage
Efficiency (%)
100
95
90
85
80
75
70
65
60
55
50
45
40
10
100
1000
10000
Load current (mA)

FIG. 15

Current
(a)
0
(b)
t
(c)
(d)

FIG. 16

Camera 22
Heating film 21

FIG. 17

Camera 22
Magnetic isolation film 23
Heating component 131
Power supply device 12
Receiving plate 25
Second coil 16
Shielding wire 24
First coil 15

FIG. 18

Europäisches
Patentamt
European
Patent Office
Office européen
des brevets

# EUROPEAN SEARCH REPORT

Application Number
EP 23 19 3911

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | CN 109 375 457 A (GUANGDONG HONGJING OPTOELECTRONIC TECH INC) 22 February 2019 (2019-02-22) * the whole document * ----- | 1-14 | INV. H05B1/02 H04N23/52 G02B7/02 B60S1/02 G03B17/55 |
| A | CN 210 181 368 U (GUANGDONG HONGJING OPTOELECTRONIC TECH INC) 24 March 2020 (2020-03-24) * the whole document * ----- | 1-14 | |
| A | US 10 397 982 B2 (TOYOTA MOTOR CO LTD [JP]) 27 August 2019 (2019-08-27) * column 6, line 31 - line 37; figure 5 * ----- | 1-14 | |

TECHNICAL FIELDS SEARCHED (IPC)

H05B
H04N
G02B
B60S
G03D
G03B

The present search report has been drawn up for all claims

1

| Place of search | Date of completion of the search | Examiner |
|---|---|---|
| Munich | 16 January 2024 | Gea Haupt, Martin |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
.......................................................................
& : member of the same patent family, corresponding document

EPO FORM 1503 03.82 (P04C01)

# ANNEX TO THE EUROPEAN SEARCH REPORT ON EUROPEAN PATENT APPLICATION NO. EP 23 19 3911

This annex lists the patent family members relating to the patent documents cited in the above-mentioned European search report. The members are as contained in the European Patent Office EDP file on The European Patent Office is in no way liable for these particulars which are merely given for the purpose of information.

16-01-2024

| Patent document cited in search report | Publication date | Patent family member(s) | Publication date |
|---|---|---|---|
| CN 109375457 A | 22-02-2019 | NONE | |
| CN 210181368 U | 24-03-2020 | NONE | |
| US 10397982 B2 | 27-08-2019 | CN 107444351 A | 08-12-2017 |
| | | EP 3228508 A1 | 11-10-2017 |
| | | JP 6589726 B2 | 16-10-2019 |
| | | JP 2017185896 A | 12-10-2017 |
| | | KR 20170114956 A | 16-10-2017 |
| | | US 2017295610 A1 | 12-10-2017 |

EPO FORM P0459

For more details about this annex : see Official Journal of the European Patent Office, No. 12/82